Europäisches Patentamt

European Patent Office

Office européen des brevets

(11) Publication number: **0 166 502**
A1

# EUROPEAN PATENT APPLICATION

(21) Application number: **85302010.5**

(51) Int. Cl.⁴: **G 01 F 1/36**

(22) Date of filing: **22.03.85**

(30) Priority: **25.06.84 US 624215**

(43) Date of publication of application: **02.01.86**
Bulletin 86/1

(84) Designated Contracting States: **DE FR GB IT**

(71) Applicant: **VICTOR EQUIPMENT COMPANY, Airport Road P.O. Box 1007, Denton Texas 76201 (US)**

(72) Inventor: **Laing, David Allen, 1127 Garden Road, Willoughby Ohio 44094 (US)**

(74) Representative: **Pears, David Ashley et al, REDDIE & GROSE 16 Theobalds Road, London WC1X 8PL (GB)**

(54) **Dual orifice flow meter.**

(57) Apparatus for measuring flow and simultaneously indicating the presence of a condition making the flow indications invalid comprises two flow restrictions (17, 19) disposed in a flow conduit (15) section with respective upstream pressure sensing transducers (27, 29). A microcomputer (31) connected to the pressure transducers compares the sensed pressures to detect the presence of an invalidating condition and determines from the sensed pressures the volumetric flow rate. A display (33, 39) displays the flow rate and an indication of any invalidating condition.

ACTORUM AG

- 1 -

DUAL ORIFICE FLOWMETER

The present invention relates to a flowmeter of the kind set forth in the introductory part of claim 1. Flowmeters of this kind are known from US 1 559 156 and US 3 924 445 in which a differential pressure transducer measures the pressure drop over two flow restrictions in series, for purposes connected with calibration of the flowmeters. The present invention is concerned with an entirely different problem, namely the fact that a flowmeter may give an invalid reading, particularly if a flow restriction becomes partially blocked. Accordingly, the present invention is characterised as further set forth in claim 1.

Flowmeters based upon flow restrictions which create pressure drops are well known. Flow restrictions are variously referred to also as orifices, venturies and jets. When these flow restrictions have been employed, usually, they have been employed in single fashion with means for monitoring the differential pressure between the upstream pressure and the pressure downstream at the vena contracta. The exact position of the vena contracta varies as the diameter of the flow restriction compared with the diameter of the encompassing conduit but is a predictable quantity, equal to a few diameters and it is easy to place pressure sensing taps outside any such vena contracta. For example, the text PRINCIPLES OF CHEMICAL ENGINEERING, Walker and Lewis, second edition 1927, shows recognition of placement of the pressure taps and cites Bulletin 109, University of Illinois Engineering Experiment Station (1918) by Davis and Jordan as showing placement of these pressure taps. The later volume of CHEMICAL ENGINEERING SERIES by Walker, Lewis, McAdams and Gilliand, third edition, 1937, McGraw Hill Book Company, Inc, New York shows the calculation of the placements of pressure taps to sense the vena contracta at page 62.

US 1 963 011 shows a meter with two flow restrictions and respective upstream pressure taps but is not in any way concerned with the problem of the present invention. The meter is a viscosity meter and the downstream tap creates a pressure drop entirely due to viscose friction.

0166502

Brief Description of the Drawings

Fig 1 is a schematic diagram illustrating one embodiment of this invention.

Fig 2 is a schematic diagram of a flow calibration set up.

Fig 3 is a graph showing between the respective pressures and flow rate where the flow restrictions are both equal.

Fig 4 is a like graph when diameter of the upstream orifice is larger than the diameter of the downstream orifice.

Fig 5 is a like graph when the diameter of the upstream orifice is smaller than the diameter of the downstream orifice.

Fig 6 is a like graph when the diameters of both orifices are the same but smaller than in Fig 3 and employed in the same test pipe diameter.

This invention is based upon the discovery that pressures that exist between and upstream of two orifices in series will be correlatable to measure the gas flow through the orifices. The pressure data in this invention is input into a microcomputer from which the outputs are displayed in terms of volumetric rate of flow and an out-of-range indicator. The out-of-range indicator will indicate that a fault may exist in the system which could render the flow rate and flow displays invalid. The total flow is simply the volumetric flow rate multiplied by the time the rate has been flowing as calculated by the microcomputer. An example of such a fault that could render the flow data invalid would be blockage in one of the orifices or in the gas line.

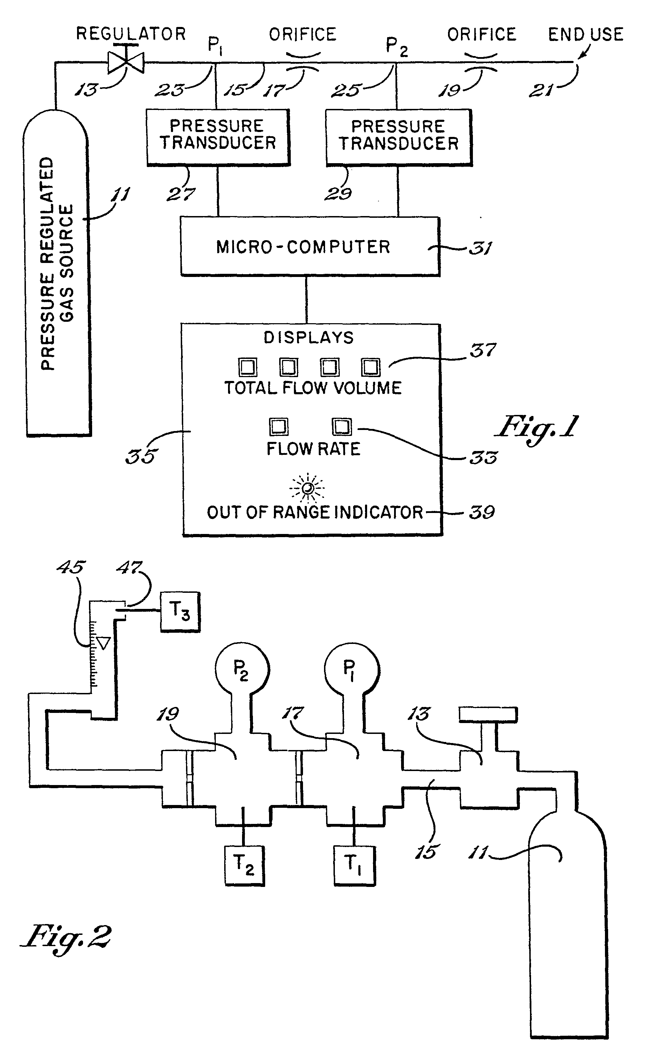

Referring to Fig 1, the gas source 11 provides the gas, such as oxygen, which is sent through regulator 13 to reduce the pressure to a predetermined magnitude, such as for distribution in a hospital oxygen system. The apparatus includes a flow conduit section 15 having a first diameter d1. Disposed within the flow conduit section are flow restrictions, shown as orifices 17 and 19 having respective diameters d2 and d3 that are less than the diameter d1. The orifices 17 and 19 are in a series flow arrangement. The term orifice is used to mean some form of flow restriction. The orifices may be square edged orifices, rounded orifices, venturis, jets and other restrictions that create a differential pressure varying with the rate of flow therethrough. The conduit is then connected to an end use 21. The end use 21 may comprise an oxygen tent for example.

As a consequence of the series arranged orifices, there will be respective upstream pressures P1 and P2 upstream of the respective orifices. These pressures are sensed at pressure taps 23, 25 that are outside the vena contracta of any upstream flow restriction, or orifice, in order to sense the average pressure upstream of the respective flow restrictions 17 and 19 with which they are employed. As can be seen, there are two pressure sensing means in the form of pressure transducers 27, 29 that are connected in fluid communication with the flow conduit section so as to sense the average pressure upstream of the respective flow restrictions 17 and 19. The pressure transducers 27 and 29 afford an interface between the pressures sensed; namely, P1 and P2; and a microcomputer 31. Specifically, they convert the pressure to a form that is usable by the microcomputer 31; for example, they serve as an analogue to digital type interface.

In any event, the microcomputer senses the pressures P1 and P2 and calculates the flow rate, or volumetric rate of flow, which is displayed as the flow rate 33 in the display means 35.

Preferably, the microcomputer 31 also has in its program, means for calculating and summing the total volumetric flow rate by multiplying the rate of flow by the time and then adding for it for each increment to afford a display labeled total volume flow 37 in Fig 1.

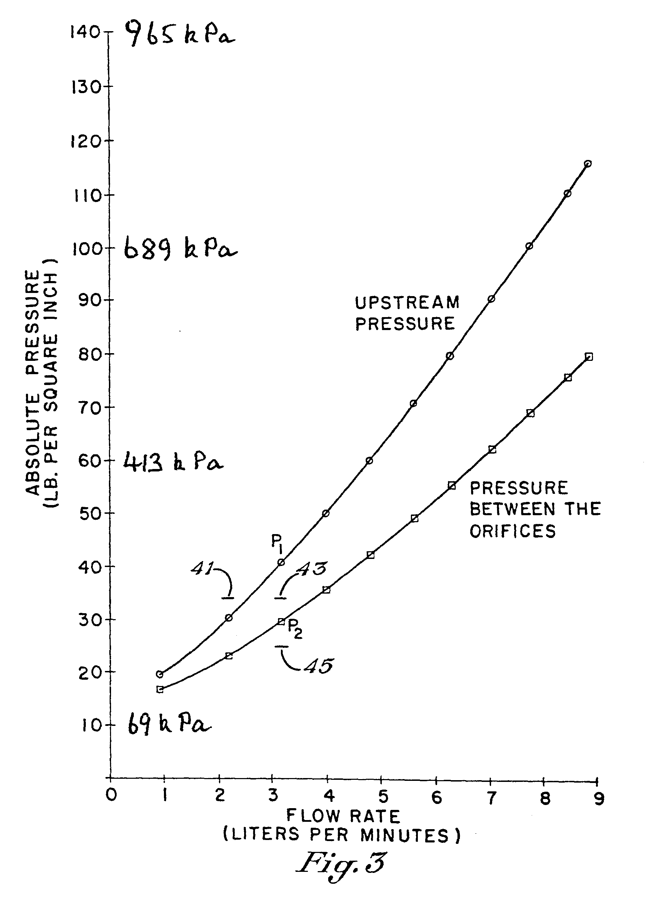

Also, the microcomputer 35 has a means for affording an indication, shown by out-of-range indicator 39 in Fig 1, that one of the pressures is inordinately high or low compared to the other pressure for the particular set up and correlation being employed. For example, if the pressure P2 between the orifices in Fig 3 is being employed as the primary pressure, then for each value of P2 a particular range of pressures for P1 would be given to the computer, indicated by the line 41 in Fig 3 illstrating an upper limit for P1. In the illustrated example, if the pressure P2 were being read in as about 165 kPa for two liters per minute flow rate, if the pressure P1 were above about 240 kPa, this would indicate an out-of-range condition, such as caused by dirt in the upstream orifice.

If, on the other hand, an upstream pressure Pl of about 290 kPa was being read as the main pressure for 3 liters per minute lines 43, 45 on Fig 3 could indicate a range within which the pressure P2 should fall or an out-of-range condition would be indicated. For example, the computer could be programmed to indicate an out-of-range condition if the pressure P2 fell below about 170 kPa, indicating an obstruction in the upstream orifice; or if pressure rose higher than about 230 kPa, indicating an obstruction in the downstream orifice. As can be seen, the use of the intermediate pressure P2 compared with a predetermined range, can afford indications of obstructions in both orifices, and, for that reason, may be preferable. The choice of the range and the magnitude of the range will vary with the particular application and the particular technican implementing the program and range magnitude for the program in the microcomputer 31.

The following examples will serve to illustrate the invention more nearly completely. In these examples, data was obtained from a test set up similar to that illustrated in Fig 2. Therein bottled gas from a source 11 was sent from pressure regulator 13 into an upstream orifice 17 where the pressure and temperature were measured as Tl and Pl. In the test apparatus the flow conduit section 15 had a standard diameter, such as 12 mm nominal diameter. A second series connected orifice 19 was disposed downstream of the first orifice 17 and the pressure and temperature of the fluid were measured as T2 and P2. A rotameter 45 was employed to measure the flow. A rotameter has a bob that moves upwardly along an enlarging bore with a calibrated scale proportional to the volumetric rate of flow therethrough. The rotameter afforded a calibrated rate of flow. The temperature was measured at the discharge 47 as the temperature T3.

In these examples, the downstream pressure at the outlet 47 was 100 kPa. The temperature of the gas upstream between the orifices and downstream of the orifices was in the range of 25 to 25.6°C it was, for all practical purposes, constant for Tl, T2 and T3. The gas density, measured at 68 degrees Fahrenheit and 101.35 kPa was 1.33 $kgm^{-3}$. The ratio of gas specific heats was 1.4.

- 5 -

## EXAMPLE I

In this example, the orifice diameters were 0.457 mm for both upstream and downstream orifices. Fig 3 shows the correlation in absolute pressure for the upstream pressure P1 and the pressure between the orifices P2 as a function of the flow rate in liters per minute, the absolute pressure being in pounds per square inch, with selected values shown in kPa.

## EXAMPLE II

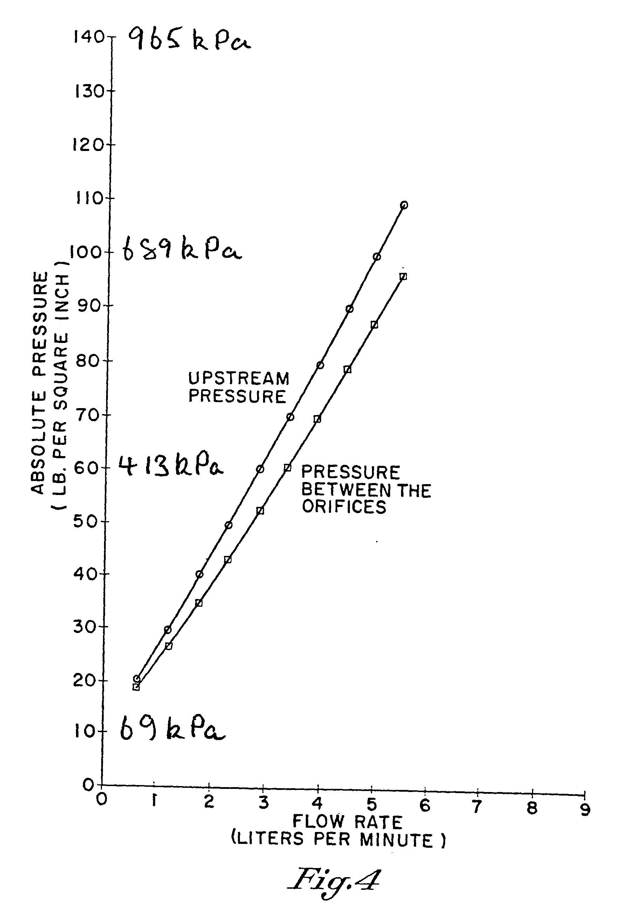

In this example, the upstream orifice had a diameter of 0.457 mm and the downstream orifice had a diameter of 0.330 mm. The results are plotted in Fig 4 in which the absolute pressure is shown as the ordinate for the respective upstream pressure P1 and the pressure between the orifices, are shown as P2 in Fig 1, as a function of the flow rate in liters per minute.

## EXAMPLE III

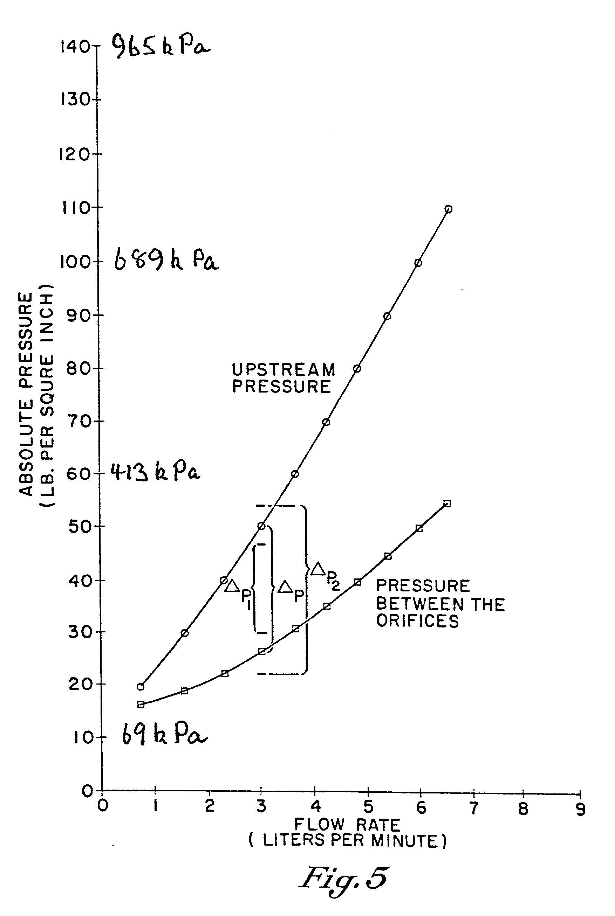

In this example the upstream orifice had a diameter of 0.330 mm and the downstream orifice had a diameter of 0.457. The results of the example are shown in Fig 5 in which the respective upstream pressure and the pressure between the orifices are shown as a function of flow rate in liters per minute.

## EXAMPLE IV

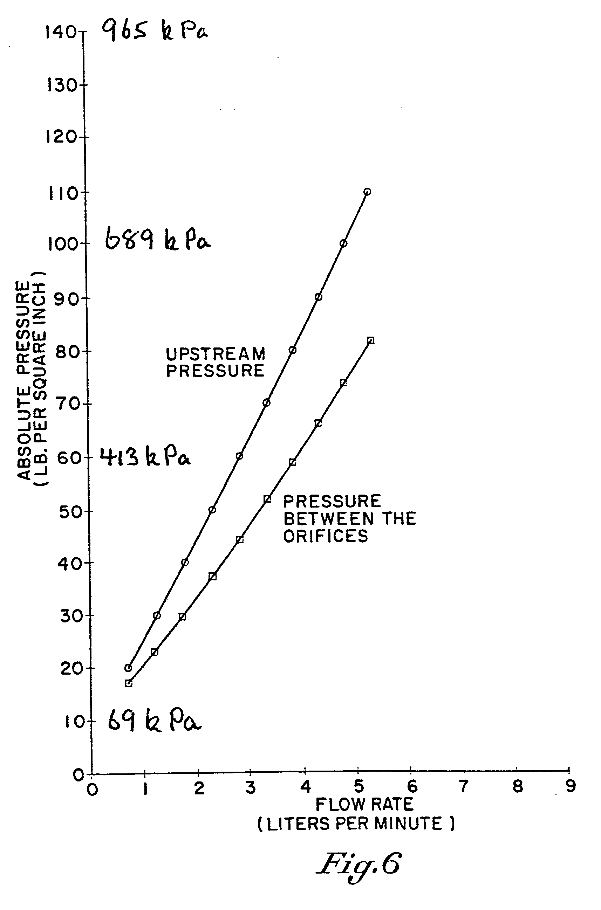

In this example, both upstream and downstream orifices had a diameter of 0.330 mm. The results are illustrated in Fig 6 in which the respective upstream pressure and pressure between the orifices are shown correlated against the flow rate in liters per minute.

One of the advantages of this invention is the large degree of flexibility that can be employed with it. For example, the differential pressure $\Delta p$ can be sensed, either directly or through microcomputer calculations, as a monitor of the flow rate, as well as the out-of-range indicator sensing. Expressed otherwise, the differential pressure $\Delta p$ may be determined as shown in Fig 5 and employed as a measure of flow rate; for example, about 3 liters per minute with minimum differential pressure $\Delta P1$ and maximum differential pressure $\Delta P2$ shown as a range for the out-of-range condition. This is particularly easy to do by a simple comparison in a microcomputer and no special programming skills are required. This is simply another way of achieving the same results described

0166502

- 6 -

hereinbefore with respect to sensing one pressure and then comparing a second pressure with a predicted correlation of ranges, as described hereinbefore with respect to Fig 3.

In operation, the flow measuring apparatus is installed and described hereinbefore with respect to Fig 1. It is described in this application with respect to pressure transducers and microcomputers with electronic displays simply because this is amenable to current hospital practice in which this invention may find its initial use. On the other hand, it will be immediately apparent that conventional differential pressure sensing meters could be employed to sense the head between the respective pressure taps and to afford an indication if this head were too large or too small once an equilibrium condition had been established by the technician setting up the apparatus.

In this embodiment, it will be described with respect to employing the upstream pressure P1 and then comparing the pressure P2 to a range of pressure between the lines 43 and 45 of Fig 3. If the pressure P2 falls on the pressure line for P2 as indicated, a flow rate of 3 liters per mintue would be indicated on the flow rate display 33. By multiplying it times the time elapsed, the microcomputer would keep current the total volumetric flow shown by a total flow volume 37. If, the pressure P2 were above the pressure shown by line 43 or below the pressure shown by line 45, an out-of-range indicator would be indicated by lighting the out-of-range indicator light 39, Fig 1. This would alert the technician that the flow rate and the volume were unreliable and suitable corrections, such as inspecting the respective orifice meters could be made.

From the foregoing, it can be seen that this invention provides a flexible, readily adaptable, economical, dependable system for both measuring the flow and simultaneously indicating the presence of a condition that would render invalid the flow rate indication.

- 7 -

CLAIMS

1. A flowmeter comprising a plurality of flow restrictions (17, 19) in series along a conduit (15), a plurality of pressure sensing connections (23, 25) to the conduit, and pressure transducer means (27, 29) coupled to the pressure sensing connections, characterised in that the pressure sensing connections (23, 25) are upstream of the flow restrictions (17, 19) respectively and are coupled to respective pressure transducers (27, 29) and further characterised by microcomputer means (31) responsive to signals from the transducers both to determine the flow rate and to compare the signals to detect an invalid condition, and display means (33, 35) displaying the flow rate and a detected invalid condition.

2. Apparatus according to claim 1, characterised in that there are two flow restrictions (17, 19) and two pressure transducers (27, 29).

3. Apparatus according to claim 2, characterised in that flow restrictions (17, 19) are of equal diameters.

4. Apparatus according to claim 2, characterised in that the diameter of the upstream restriction (17) is larger than the diameter of the downstream restriction (19).

5. Apparatus according to claim 2, characterised in that the upstream restriction (17) is smaller than the diameter of the downstream restriction (19).

6. Apparatus according to any of claims 1 to 5 characterised in that the microcomputer means (31) compares the signals by determining a permitted range for one of the signals in dependence upon the value of the other signal and the invalid condition is detected when the one signal is out of range.

7. Apparatus according to any of claims 1 to 5 characterised in that the microcomputer means (31) compare the signals by determining a permitted range for the difference between the two signals in dependence upon the value of one of the signals and the invalid condition is detected when the said differences goes out of range.

0166502

*Fig.1*

*Fig.2*

0166502

2/5

Fig.3

0166502

3/5

Fig.4

Fig. 5

5/5

0166502

Fig.6

European Patent
Office

**EUROPEAN SEARCH REPORT**

Application number

| DOCUMENTS CONSIDERED TO BE RELEVANT | | | EP 85302010.5 |

| Category | Citation of document with indication, where appropriate, of relevant passages | Relevant to claim | CLASSIFICATION OF THE APPLICATION (Int. Cl.⁴) |
|---|---|---|---|
| A | US - A - 3 198 009 (FISHMAN et al.)  * Fig. 1,2 *  -- | 1-3 | G 01 F 1/36 |
| A | FR - A - 1 393 637 (CUSHING)  * Fig. 7 *  -- | 1,2 | |
| A | US - A - 4 406 161 (LOCKE et al.)  * Fig. 2; column 2, lines 48-65 *  ---- | 1 | |

|  |  |  | TECHNICAL FIELDS SEARCHED (Int. Cl.⁴)  G 01 F 1/00 |

The present search report has been drawn up for all claims

| Place of search  VIENNA | Date of completion of the search  24-09-1985 | Examiner  BURGHARDT |